(19) Europäisches Patentamt
European Patent Office
Office européen des brevets

(11) EP 4 718 184 A1

(12) EUROPEAN PATENT APPLICATION

(43) Date of publication:
01.04.2026 Bulletin 2026/14

(21) Application number: 25185510.2

(22) Date of filing: 26.06.2025

(51) International Patent Classification (IPC):
G05B 19/418 (2006.01)

(52) Cooperative Patent Classification (CPC):
G05B 19/4184; G05B 19/4183; G05B 19/4185;
G05B 2219/14037; G05B 2219/14084;
G05B 2219/31455; G05B 2219/45191;
G05B 2219/45193; G05B 2219/45196; Y02P 90/02

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH LA MA MD TN

(30) Priority: 29.09.2024 CN 202411370310

(71) Applicants:
• Zhejiang Hengyi Petrochemical Co., Ltd.
Zhejiang 311200 (CN)
• Shaoxing Shengong Packaging Co., Ltd.
Shaoxing City, Zhejiang 311200 (CN)

(72) Inventors:
• QIU, Yibo
Hangzhou, 311200 (CN)

• PENG, Xiantao
Hangzhou, 311200 (CN)
• JIN, Junliang
Hangzhou, 311200 (CN)
• SHI, Yinger
Hangzhou, 311200 (CN)
• LI, Dake
Hangzhou, 311200 (CN)
• XU, Feng
Hangzhou, 311200 (CN)
• WANG, Dandan
Hangzhou, 311200 (CN)
• SHEN, Jun
Hangzhou, 311200 (CN)

(74) Representative: Richly & Ritschel Patentanwälte
PartG mbB
Sattlerweg 20
51429 Bergisch Gladbach (DE)

(54) METHOD AND APPARATUS FOR CONTROLLING MOVEMENT OF A YARN SPINDLE, APPARATUS AND STORAGE MEDIUM

(57) A method, an apparatus and a non-transitory computer storage medium for controlling movement of a yarn spindle are provided. The method includes: taking a second controller as a target controller, and receiving target data sent by the target controller when determining that a communication link from the target controller to a first controller is in a normal state; sending the target data to a manufacturing execution system, where the manufacturing execution system is configured to obtain a target indication based on the target data, and send the target indication to the first controller; receiving the target indication sent by the manufacturing execution system; and sending the target indication to the target controller; where the target controller is configured to carry on the movement control operation for the yarn spindle product.

FIG. 1

## Description

TECHNICAL FIELD

The present disclosure relates to the field of computer and automatic control, particularly to method and apparatus for controlling transit of a yarn spindle, an electronic device and a storage medium.

BACKGROUND

During a production process of a yarn spindle product, building an efficient assembly line is an essential core link to ensure production capacity and production efficiency. On the assembly line, there is a plurality of closely connected and highly coordinated yarn spindle workstations, each of which is responsible for a task of carrying out a specific production operation on the yarn spindle product. Ensuring that the yarn spindle product can flow efficiently and accurately and/or making a decision on whether the yarn spindle product transits a yarn spindle workstation when the yarn spindle product is transiting the yarn spindle workstation are/is a key to maintain efficiently operating of the assembly line.

SUMMARY

The present disclosure provides detection method and apparatus, a device and a storage medium for solving one or more technical problems in the prior art.
As a first aspect, the present disclosure provides a method for controlling transit of a yarn spindle, applied to a first controller included in a system for controlling transit of the yarn spindle, the system for controlling transit of the yarn spindle further includes a manufacturing execution system in communication with the first controller and a plurality of second controllers, where each of the plurality of second controller has a corresponding yarn spindle workstation for obtaining business data related to the yarn spindle workstation, and carries on a transit control operation for a yarn spindle product transiting the yarn spindle workstation; and the method includes:

 taking each of the plurality of second controllers as a target controller, and receiving target business data sent by the target controller in a case of determining that a communication link from the target controller to the first controller is in a normal state;
 sending the target business data to the manufacturing execution system; where the manufacturing execution system is configured to obtain a target transit indication based on the target business data, and send the target transit indication to the first controller;
 receiving the target transit indication sent by the manufacturing execution system; and
 sending the target transit indication to the target controller; where the target controller is configured to carry on the transit control operation for the yarn spindle product transiting the target workstation corresponding to the target controller based on the target transit indication.

As a second aspect, the present disclosure provides an apparatus for controlling transit of a yarn spindle, applied to a first controller included in a system for controlling transit of the yarn spindle, the system for controlling transit of the yarn spindle further includes a manufacturing execution system in communication with the first controller and a plurality of second controllers, where each of the plurality of second controller has a corresponding yarn spindle workstation for obtaining business data related to the yarn spindle workstation, and carries on a transit control operation for a yarn spindle product transiting the yarn spindle workstation; and
the apparatus includes:

 a business data receiving unit configured to take each of the plurality of second controllers as a target controller, and receive target business data sent by the target controller in a case of determining that a communication link from the target controller to the first controller is in a normal state;
 a business data sending unit configured to send the target business data to the manufacturing execution system; where the manufacturing execution system is configured to obtain a target transit indication based on the target business data, and send the target transit indication to the first controller;
 a transit indication receiving unit configured to receive the target transit indication sent by the manufacturing execution system; and
 a transit indication sending unit configured to send the target transit indication to the target controller; where the target controller is configured to carry on the transit control operation for the yarn spindle product transiting the target workstation corresponding to the target controller based on the target transit indication.

As a third aspect, an electronic device is provided, which includes:

 at least one processor; and
 a memory connected in communication with the at least one processor,
 where the memory stores an instruction executable by the at least one processor, and the instruction, when executed by the at least one processor, enables the at least one processor to execute the method of any of the embodiments of the present disclosure.

As a fourth aspect, a non-transitory computer-readable storage medium storing a computer instruction thereon is provided, where the computer instruction is used to cause a computer to execute the method of any of the embodiments of the present disclosure.

Adopting the technical solution provided by the present disclosure can ensure that a yarn spindle product can flow efficiently and accurately and/or make a decision on whether the yarn spindle product transits a yarn spindle workstation when the yarn spindle product is transiting the yarn spindle workstation, to maintain efficiently operating of an assembly line.

It should be understood that the content described in this part is not intended to identify critical or essential features of embodiments of the present disclosure, nor is it used to limit the scope of the present disclosure. Other features of the present disclosure will be easily understood through the following description.

BRIEF DESCRIPTION OF THE DRAWINGS

In the accompanying drawings, same or similar components or elements are represented by same reference numerals throughout the accompanying drawings, unless otherwise specified. The accompanying drawings may not necessarily be drawn to scale. It should be understood that the accompanying drawings only depict some embodiments provided according to the present disclosure and should not be considered as limiting the scope of the present disclosure.

FIG. 1 is a schematic structural block diagram of a system for controlling transit of a yarn spindle provided by embodiments of the present disclosure.

FIG. 2 is a flowchart diagram of a method for controlling transit of a yarn spindle provided by embodiments of the present disclosure.

FIG. 3 is a schematic diagram of partial processes involved in a method for controlling transit of a yarn spindle provided by embodiments of the present disclosure.

FIG. 4 is a schematic structural block diagram of an apparatus for controlling transit of a yarn spindle provided by embodiments of the present disclosure.

FIG. 5 is a schematic structural block diagram of an electronic device provided by embodiments of the present application.

DETAILED DESCRIPTION

Hereinafter the present disclosure is described in further detail below with reference to the accompanying drawings. The same reference numerals in the accompanying drawings indicate elements with the same or similar function. Although various aspects of embodiments are shown in the accompanying drawings, it is not necessary to draw the accompanying drawings to scale unless otherwise indicated.

In addition, in order to better illustrate the present disclosure, a number of specific details are given in specific implementations below. Those having skill in the art should understand that the present disclosure may also be implemented without certain specific details. In some examples, methods, means, components, circuits and the like which are well known to those having skill in the art are not described in detail, so as to highlight the main purpose of the present disclosure.

As described in the background, during a production process of a yarn spindle product, building an efficient assembly line is an essential core link to ensure production capacity and production efficiency. On the assembly line, there is a plurality of closely connected and highly coordinated yarn spindle workstations, each of which is responsible for a task of carrying out a specific production operation on the yarn spindle product. The plurality of yarn spindle workstations may include a weighing workstation for weighting the yarn spindle product, an external inspection workstation for carrying out intelligent external inspection on the yarn spindle product, a bagging workstation for bagging the yarn spindle product, and the like. Ensuring that the yarn spindle product can flow efficiently and accurately and/or making a decision on whether the yarn spindle product transits a yarn spindle workstation when the yarn spindle product is transiting the yarn spindle workstation are/is a key to maintain efficiently operating of the assembly line. On these bases, for ensuring that the yarn spindle product can flow efficiently and accurately and/or making the decision on whether the yarn spindle product transits the yarn spindle workstation when the yarn spindle product is transiting the yarn spindle workstation to maintain the efficiently operating of the assembly line, the embodiments of the present disclosure provide a method for controlling transit of a yarn spindle.

Before explaining the method for controlling the transit of the yarn spindle provided by the embodiments of the present disclosure, it should be noted that a main type of the yarn spindle product in the embodiments of the present application may include at least one of a partially oriented yarn (POY), a fully drawn yarn (FDY), a draw textured yarn (DTY, also known as a low elasticity yarn) and the like. For example, a type of the yarn spindle product may specifically include a polyester partially oriented yarn, a polyester fully drawn yarn, a polyester drawn yarn, a polyester draw textured yarn and the like.

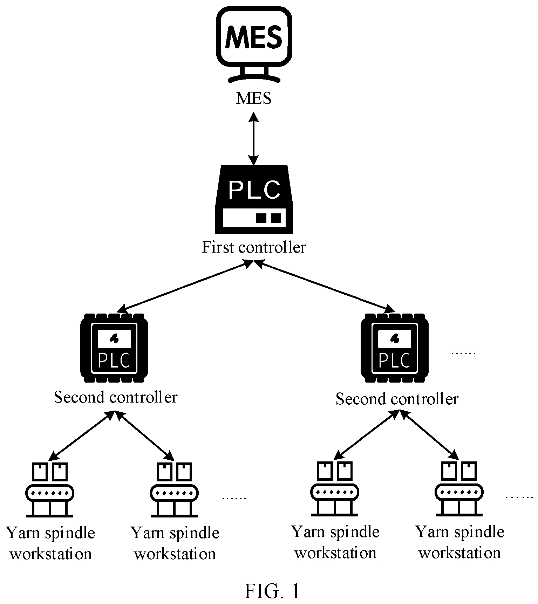

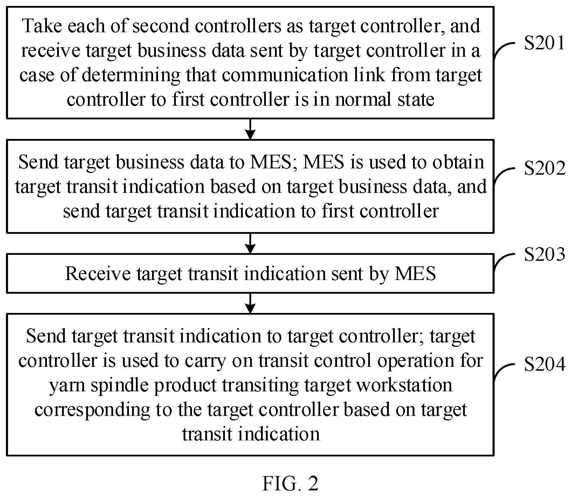

Hereinafter, the method for controlling transit of the yarn spindle provided in the embodiments of the present disclosure will be explained in combination with FIGS. 1 and 2.

First, FIG. 1 is a schematic structural block diagram of a system for controlling transit of a yarn spindle provided by the embodiments of the present disclosure, the system includes a first controller, a manufacturing execution system (MES) in communication with the first controller, and a plurality of second controllers. The first controller may be a programmable logic controller (PLC), the second controllers may also be the PLC, the MES may be applied to a terminal device or a server. Here, the terminal device may be a workbench, a large computer, a conventional computer (such as a desktop computer, a laptop), or other similar computing devices.

In the embodiments of the present disclosure, each of the plurality of second controllers has a corresponding yarn spindle workstation (at least one in number) for obtaining business data related to the yarn spindle workstation. The business data may include a device state and quality control reference data obtained by a production control device during a production process of a yarn spindle product, and may further include a production progress. Here, the device state may include an operating state, a fault record, a maintenance condition and the like of the production control device. The quality control reference data may include a yarn spindle weight of the yarn spindle product, a yarn spindle external inspection result and the like. The production progress may include completion time of each production stage, a current production statistical result and the like. For example, if the yarn spindle workstation is a weighing workstation, the business data related to the weighing workstation may include the yarn spindle weight (belonging to the quality control reference data) obtained by a weighing sensor (belonging to the production control device) during the production process of the yarn spindle product. For example, if the yarn spindle workstation is the external inspection workstation, the business data related to the external inspection workstation may include the yarn spindle external inspection result (belonging to the quality control reference data) obtained by an external inspection device (belonging to the production control device) during the production process of the yarn spindle product.

For each of the plurality of second controllers, the second controller obtains business data related to a yarn spindle workstation corresponding to itself and sends the business data to the first controller. The first controller then sends the business data to the MES. The MES may obtain a transit indication related to the yarn spindle workstation based on the business data and send the transit indication to the first controller. The first controller then sends the transit indication to the second controller, so that the second controller may carry on a transit control operation for the yarn spindle product transiting the yarn spindle workstation based on the transit indication. The transit control operation may be achieved through a transit control device (such as a yarn spindle diversion device, a transfer robot or the like) set at the yarn spindle workstation. The transit control operation is used to control flowing of the yarn spindle product transiting the yarn spindle workstation and/or control whether the yarn spindle product transits the yarn spindle workstation (allowing or prohibiting transit of the yarn spindle product).

Please referring to FIG. 2, FIG. 2 is a flowchart diagram of the method for controlling transit of the yarn spindle provided by the embodiments of the present disclosure, and is applied to the first controller included in the system for controlling transit of the yarn spindle. In addition, it should be noted that although ta logical sequence is shown in the flowchart, in some cases, the steps shown or described may also be executed in other orders.

At step S201, each of the plurality of second controllers is taken as a target controller, and target business data sent by the target controller is received in a case of determining that a communication link from the target controller to the first controller is in a normal state.

At least one yarn spindle workstation corresponding to the target controller includes a target workstation, and the target controller may obtain business data related to the target workstation as the target business data. Afterwards, the first controller may receive the target business data sent by the target controller in the case of determining the communication link from the target controller to the first controller is in the normal state.

At step S202, the target business data is sent to the MES.

The first controller may establish a communication link with the MES through a network or management interface (MI) communication manner. After receiving the target business data sent by the target controller, the first controller may convert the target business data according to a preset data format to obtain format-converted target business data that can be processed by the MES, and send the format-converted target business data to the MES.

In addition, in the embodiments of the present disclosure, the MES is used to obtain a target transit indication based on the target business data (e.g., the format-converted target business data), and send the target transit indication to the first controller. The target transit indication is used to instruct the target controller to perform the transit control operation for the yarn spindle product transiting the target workstation.

At step S203, the target transit indication sent by the MES is received.

At step S204, the target transit indication is sent to the target controller.

The target controller is used to carry on the transit control operation for the yarn spindle product transiting the target workstation based on the target transit indication. Here, the transit control operation may be achieved through the transit control device set at the target workstation corresponding to the target controller. The transit control operation is used to control flowing of the yarn spindle product transiting the target workstation and/or control whether the yarn spindle product transits the target workstation.

By adopting the method for controlling transit of the yarn spindle provided in the embodiments of the present disclosure, on the one hand, centralized management and integration of the business data may be achieved using the first controller by taking the first controller as an intermediate layer between the plurality of second controllers and the MES, thereby reducing a data processing burden of the MES, enhancing scalability and security of the system for controlling transit of the yarn spindle, simplifying a network structure of the system for controlling transit of the yarn spindle, and improving stability of the system for controlling transit of the yarn spindle; on the other hand, since the first controller only receives the target business data sent by the target controller when it is determined that the communication link from the target controller to itself is in the normal state, it can avoid the first controller starting to receive data and receiving damaged, incorrect or invalid data as the target business data when the communication link from the target controller to itself is in an abnormal state, thereby ensuring that the target business data received by the MES is also accurate and error free, and ultimately, ensuring that the MES can obtain an accurate target transit indication based on the target business data, so that the target controller can accurately perform the transit control operation for the yarn spindle product transiting the target workstation, that is, ensuring that the yarn spindle product can be efficiently and accurately flowed and/or making a decision on whether the yarn spindle product transits the yarn spindle workstation when the yarn spindle product is transiting the yarn spindle workstation, in order to maintain efficiently operating of the assembly line.

In addition, it should be noted that in the embodiments of the present disclosure, after receiving the target business data, the MES may determine a transit evaluation mechanism corresponding to the target business data based on a data attribute of the target business data, and obtain the target transit indication based on the target business data according to the transit evaluation mechanism.

For example, if the target business data is the yarn spindle external inspection result, the transit evaluation mechanism corresponding to the target business data may include obtaining a first transit indication in a case where the yarn spindle external inspection result represents that the yarn spindle product belongs to a S-level product (a transit control operation corresponding to the first transit indication is diverting the yarn spindle product from a main assembly line to a first assembly line); obtaining a second transit indication in a case where the yarn spindle external inspection result represents that the yarn spindle product belongs to an A-level product (a transit control operation corresponding to the second transit indication is diverting the yarn spindle product from the main assembly line to a second assembly line); and obtaining a third transit indication in a case where the yarn spindle external inspection result indicates that the yarn spindle product belongs to a B-level product (a transit control operation corresponding the third transit indication is diverting the yarn spindle product from the main assembly line to a third assembly line).

For another example, if the target business data is the yarn spindle weight, the transit evaluation mechanism corresponding to the target business data may include obtaining the first transit indication when the yarn spindle weight is within a preset weight range (the transit control operation corresponding to the first transit indication is allowing transit); obtaining the second transit indication when the yarn spindle weight exceeds the preset weight range (the transit control operation corresponding to the second transit indication is prohibiting transit). The preset weight range may be set according to actual application requirements, which is not limited by the embodiments of the present disclosure.

Furthermore, in the embodiments of the present disclosure, the first controller may generate a heartbeat data packet including current heartbeat count value (e.g., using a random heartbeat count value as the current heartbeat count value), and send the heartbeat data packet to the target controller. The target controller is used to obtain the current heartbeat count value carried in the heartbeat data packet after receiving the heartbeat data packet, and perform a "+1" operation on the current heartbeat count value (increments the current heartbeat count value by one) to obtain a heartbeat count response value, and then generate a heartbeat response data packet including the heartbeat count response value. On these bases, in some alternative implementations, the step S201, that is, "receiving the target business data sent by the target controller when it is determined that the communication link from the target controller to the first controller is in the normal state", may include:

executing a heartbeat data receiving instruction, the heartbeat data receiving instruction is used to instruct the first controller to receive the heartbeat response data packet sent by the target controller; and

determining that the communication link from the target controller to the first controller is in the normal state, and receiving the target business data sent by the target controller, in a case where the heartbeat data receiving instruction is successfully executed (i.e., the heartbeat response data packet sent by the target controller is successfully received).

In an example, the first controller may execute the heartbeat data receiving instruction according to a preset time interval. The preset time interval may be set according to actual application requirements, which is not limited by the embodiments of the present disclosure.

In addition, in the embodiments of the present disclosure, the heartbeat data receiving instruction may be a "GET instruction". Based on this, in the embodiments of the present disclosure, a first state code (e.g., an Error state code) and a second state code (e.g., an Status state code) are obtained after executing the heartbeat data receiving instruction, and it is determined that the heartbeat data receiving instruction has been successfully executed in a case where both the first and second state codes are 0, and it is determined that the heartbeat data receiving instruction has not been successfully executed in a case where at least one of the first and second state codes is not 0.

Through the above manners, in the embodiments of the present disclosure, the heartbeat data receiving instruction may be executed, and it is determined that the communication link from the target controller to the first controller is in the normal state in the case where the heartbeat data receiving instruction is successfully executed, and the target service data sent by the target controller is received. This kind of active probing mechanism can timely confirm the case where the communication link from the target controller to the first controller is in the normal state, thereby ensuring that the target business data can be timely received by the first controller, reducing delay transmission of the target business data, and more effectively maintaining efficiently operating of the assembly line.

In an alternative implementation, "determining that the communication link from the target controller to the first controller is in the normal state, and receiving the target business data sent by the target controller, in the case where the heartbeat data receiving instruction is successfully executed" may include:

obtaining the heartbeat count response value carried in the heartbeat response data packet in the case where the heartbeat data receiving instruction is successfully executed;

obtaining the latest heartbeat count transmitting value stored in the first controller; and

determining that the communication link from the target controller to the first controller is in the normal state, and receiving the target business data sent by the target controller, in a case where the heartbeat count response value and the latest heartbeat count transmitting value satisfy a preset logical relationship.

The latest heartbeat count transmitting value may be the current heartbeat count value carried in the heartbeat data packet latest sent by the first controller to the target controller.

In addition, in an example, the preset logical relationship may be that the heartbeat count response value and the latest heartbeat count transmitting value are not equal to each other. In another example, the preset logical relationship may also be: the heartbeat count response value = the latest heartbeat count transmitting value + 1.

Through the above manners, in the embodiments of the present disclosure, only when the heartbeat count response value carried in the heartbeat response data packet and the latest heartbeat count transmitting value stored in the first controller are obtained, and the heartbeat count response value and the latest heartbeat count transmitting value satisfy the preset logical relationship, will it be determined that the communication link from the target controller to the first controller is in the normal state and receive the target business data sent by the target controller, thereby ensuring reliability of a result of determining whether the communication link from the target controller to the first controller is in the normal state.

In another alternative implementation, the heartbeat data receiving instruction may be specifically used to instruct the first controller to respectively receive the heartbeat response data packet sent by the target controller through a plurality of candidate links. The plurality of candidate links may be communication links pre-established between the target controller and the first controller. In an example, the plurality of candidate links may include an Ethernet communication link, a serial communication link built based on a serial communication protocol, a wireless LAN communication link, a wireless sensor network link composed of distributed sensor nodes, and the like.

Based on the above contents, in the above implementations, "determining that the communication link from the target controller to the first controller is in the normal state, and receiving the target business data sent by the target controller, in the case where the heartbeat data receiving instruction is successfully executed" may also include:

determining that the communication link from the target controller to the first controller is in the normal state in a case where there is at least one communicable link in the plurality of candidate links, the communicable link is a candidate link through which the heartbeat response data packet sent by the target controller is successfully received to represent that the heartbeat data receiving instruction is successfully executed, the heartbeat count response value carried in the heartbeat response data packet received through the communicable link and the latest heartbeat count transmitting value stored in the first controller satisfy the preset logical relationship;

selecting a communicable link with the best communication state from the at least one communicable link as a target link; and

receiving the target business data sent by the target controller through the target link.

As mentioned above, in the embodiments of the present disclosure, the heartbeat data receiving instruction being successfully executed may be understood as successful reception of the heartbeat response data packet sent by the target controller. Specifically, in the above implementations, as long as there is the at least one communicable link in the plurality of candidate links (i.e., a candidate link through which the heartbeat response data packet sent by the target controller is successfully received), it is considered that the heartbeat data receiving instruction has been successfully executed, and in the case where the heartbeat data receiving instruction has been successfully executed, it is determined that the communication link from the first controller to the target controller is in the normal state.

In addition, in the above implementations, the latest heartbeat count transmitting value may be the current heartbeat count value carried in the heartbeat data packet latest sent by the first controller to the target controller, the preset logical relationship may be that the heartbeat count response value is not equal to the latest heartbeat count transmitting value, or the preset logical relationship may be that the heartbeat count response value = the latest heartbeat count transmitting value + 1.

After determining that the communication link from the target controller to the first controller is in the normal state, the communicable link with the best communication state may be selected from the at least one communicable link as the target link, and the target business data sent by the target controller may be received through the target link.

Furthermore, in an example, "selecting the communicable link with the best communication state from the at least one communicable link as the target link" may include:

> determining a plurality of evaluation indicators;
> obtaining a plurality of target weights corresponding to the plurality of evaluation indicators one by one; and
> selecting the communicable link with the best communication state from the at least one communicable link as the target link based on the plurality of evaluation indicators and the plurality of target weights.

The plurality of evaluation indicators may include signal quality, communication delay, link bandwidth, and the like. Here, the signal quality may be used to characterize a bit error rate (BER), a signal-to-noise ratio (SNR) and the like of a communication signal transmitted over the communicable link. For each of the at least one communicable link, the communication delay of the communicable link may be a time difference between a first time point and a second time point, the first time point may be a time point when the first controller sends the heartbeat data packet to the target controller through the communicable link, and the second time point may be a time point when the first controller receives the heartbeat response data packet feedback from the target controller after sending the heartbeat data packet to the target controller through the communicable link. The link bandwidth may be used to characterize the maximum amount of data that can be transmitted at a time on the communicable link.

In addition, in a specific example, the plurality of target weights corresponding to the plurality of evaluation indicators one by one may be set according to actual application needs, which is not limited in the embodiments of the present disclosure. In another specific example, the plurality of target weights corresponding to the plurality of evaluation indicators one by one may also be dynamically obtained. For example, the plurality of target weights corresponding to the plurality of evaluation indicators may be dynamically obtained one by one by:

> obtaining a plurality of reference weights corresponding to the plurality of evaluation indicators one by one; and
> adjusting the plurality of reference weights respectively based on the target business data, to obtain the plurality of target weights corresponding to the plurality of evaluation indicators one by one.

The plurality of reference weights corresponding to the plurality of evaluation indicators one by one may be set according to actual application needs, which is not limited in the embodiments of the present disclosure.

After obtaining the plurality of reference weights corresponding to the plurality of evaluation indicators one by one, the plurality of reference weights may be adjusted respectively based on the target business data to obtain the plurality of target weights corresponding to the plurality of evaluation indicators one by one. Specifically, the device state and the production progress may be extracted from the target business data, and the plurality of reference weights may be adjusted respectively based on the device state and the production progress, to obtain the plurality of target weights corresponding to the plurality of evaluation indicators one by one.

For example, a reference weight corresponding to the signal quality is 4/10, a reference weight corresponding to the communication delay is 3/10, and a reference weight corresponding to the link bandwidth is 3/10. In a case where the device state is poor and the production progress is slow, the reference weight corresponding to the signal quality may be increased to obtain a target weight corresponding to the signal quality, for example, 6/10, and the reference weight corresponding to the communication delay may be used as a target weight corresponding to the communication delay, that is, the target weight corresponding to the communication delay may be obtained as 3/10, and the reference weight corresponding to the link bandwidth may be decreased to obtain a target weight corresponding to the link bandwidth, for example, 1/10. In a case where the device state is poor and the production progress is fast, the reference weight corresponding to the signal quality may be increased to obtain the target weight corresponding to the signal quality, for example, 6/10, the reference weight corresponding to the communication delay may be decreased to obtain the target weight corresponding to the communication delay, for example, 2/10, and the reference weight corresponding to the link bandwidth may be decreased to obtain the target weight corresponding to the link bandwidth, for example, 2/10. In a case where the device state is good and the production progress is slow, the reference weight corresponding to the signal quality may be used as the target weight corresponding to the signal quality, that is, the target weight corresponding to the signal quality may be obtained as 4/10, the reference weight corresponding to the communication delay may be increased to obtain the target weight corresponding to the communication delay, for example, 4/10, and the reference weight corresponding to the link bandwidth may be decreased to obtain the target weight corresponding to the link bandwidth, for example, 2/10. In a case where the device state is good and the production progress is fast, the reference weight corresponding to the signal quality may be used as the target weight corresponding to the signal quality, that is, the target weight corresponding to the signal quality may be obtained as 4/10, the reference weight corresponding to the communication delay may be used as the target weight corresponding to the communication delay, that is, the target weight corresponding to the communication delay may be obtained as 3/10, and the reference weight corresponding to the link bandwidth may be used as the target weight corresponding to the link bandwidth, that is, the target weight corresponding to the link bandwidth may be obtained as 3/10.

The device state being poor may be due to an unstable operation state of the production control device (which may be specifically determined based on a temperature fluctuation condition, a voltage fluctuation condition, an error rate and the like of the production control device) and/or a large number of fault records (for example, a number of faults is greater than or equal to a threshold of a number of records). Conversely, the device state being good may be due to a stable operation state of the production control device (which may be specifically determined by the temperature fluctuation condition, the voltage fluctuation condition, the error rate and the like of the production control device) and fewer fault records (for example, the number of faults is less than the threshold of the number of records). The production progress being slow may be due to the current production statistical result not meeting a preset production requirement (e.g., the current production statistical result is less than a preset proportion threshold of a total production plan). Conversely, the production progress being fast may be due to the current production statistical result meeting the preset production requirement (e.g., the current production statistical result is greater than the preset proportion threshold of the total production plan). Here, the threshold of the number of records and the preset proportion threshold may be set according to actual application requirements, which are not limited in the embodiments of the present disclosure.

After determining the plurality of evaluation indicators and obtaining the plurality of target weights corresponding to the plurality of evaluation indicators one by one, the communicable link with the best communication state may be selected from the at least one communicable link as the target link based on the plurality of evaluation indicators and the plurality of target weights.

In a specific example, each of the at least one communicable link may be taken as a link to be evaluated, and evaluation result representation values of the link to be evaluated under the plurality of evaluation indicators may be obtained to obtain a plurality of evaluation result representation values related to the link to be evaluated. A state evaluation score of the link to be evaluated is obtained based on the plurality of evaluation result representation values related to the link to be evaluated and the plurality of target weights. For example, the state evaluation score of the link to be evaluated may be obtained through the following logic:

$$V = QA1 + DA2 + BA3.$$

Here V is used to represent the state evaluation score of the link to be evaluated; Q is used to represent a first evaluation result representation value of the link to be evaluated under an evaluation indicator of the signal quality (the higher the first evaluation result representation value, the higher the signal quality of the link to be evaluated, and conversely, the lower the first evaluation result representation value, the lower the signal quality of the link to be evaluated); A1 is used to represent the target weight corresponding to the signal quality; D is used to represent a second evaluation result representation value of the link to be evaluated under an evaluation indicator of the communication delay (the higher the second evaluation result representation value, the shorter the communication delay of the link to be evaluated, and conversely, the lower the second evaluation result representation value, the longer the communication delay of the link to be evaluated); A2 is used to represent the target weight corresponding to the communication delay; B is used to represent a third evaluation result representation value of the link to be evaluated under an evaluation indicator of the link bandwidth (the higher the third evaluation result representation value, the larger the link bandwidth of the link to be evaluated, and conversely, the lower the third evaluation result representation value, the smaller the link bandwidth of the link to be evaluated); and A3 is used to represent the target weight corresponding to the link bandwidth.

After obtaining the state evaluation score of each of the at least one communicable link, the communicable link with the highest state evaluation score may be selected from the at least one communicable link as the communicable link with the best communication state, that is, the target link.

Through the above manners, in the embodiments of the present disclosure, it is possible to determine that the communication link from the target controller to the first controller is in the normal state in the case where there is at least one communicable link in the plurality of candidate links, and the communicable link with the best communication state may be selected from the at least one communicable link as the target link, and then the target business data sent by the target controller may be received through the target link. In this way, it may further ensure that the target business data received by the MES is also accurate and error free. Ultimately, it may ensure that the MES can obtain the accurate target transit indication based on the target business data, so that the target controller can accurately perform the transit control operation for the yarn spindle product transiting the target workstation, that is, ensure that the yarn spindle product can flow efficiently and accurately and/or make the decision on whether the yarn spindle product transits the yarn spindle workstation when the yarn spindle product is transiting the yarn spindle workstation, in order to maintain efficiently operating of the assembly line.

Furthermore, in the embodiments of the present disclosure, after determining that the communication link from the target controller to the first controller is in the normal state, the target business data sent by the target controller may be received first, and then a heartbeat result flag bit is set (i.e., setting HB_OK = 1). Alternatively, the heartbeat result flag bit is set first (i.e., setting HB_OK = 1), and then the target business data sent by the target controller is received. Alternatively, while receiving the target business data sent by the target controller, the heartbeat result flag bit is set (i.e., setting HB_OK = 1). Afterwards, the heartbeat count response value and the latest heartbeat count transmitting value are reset.

In addition, in the embodiments of the present disclosure, after determining that the communication link from the target controller to the first controller is in the abnormal state, the heartbeat result flag bit may be reset first (i.e., setting HB_OK = 0), and then the heartbeat count response value and the latest heartbeat count transmitting value are reset.

In some alternative implementations, the method for controlling transit of the yarn spindle may also include:

   generating an abnormity indication result in a case where the heartbeat data receiving instruction is not successfully executed, the abnormity indication result is used to represent that the communication link from the target controller to the first controller is in the abnormal state; and
   generating a single abnormity record based on the abnormity indication result.

The single abnormity record may be identified by an error code of 3308.

Through the above manners, in the embodiments of the present disclosure, the abnormity indication result may be generated when the heartbeat data receiving instruction is not successfully executed, to represent that the communication link from the target controller to the first controller is in the abnormal state, and the single abnormity record may be generated based on the abnormity indication result. In this way, when the single abnormity record is detected, it may be determined that there is a potential stability issue in the communication link from the target controller to the first controller, so as to take a corresponding measure to optimize the communication link from the target controller to the first controller.

In some alternative implementations, "generating the single abnormity record based on the abnormity indication result" may include:

   obtaining a target timestamp corresponding to the abnormity indication result; and
   generating the single abnormity record based on the target timestamp.

In an example, the timestamp recorded by the first controller when executing the heartbeat data receiving instruction corresponding to the abnormity indication result may be obtained as the target timestamp corresponding to the abnormity indication result, and the single abnormity record may be generated based on the target timestamp.

In a specific example, the single abnormity record may be generated based solely on the target timestamp. For example, the single abnormity record including the target timestamp is generated. For example, a specified time period with the target timestamp as a midpoint and including first preset time lengths before and after the midpoint is generated as the single abnormity record. The first preset time lengths may be set according to actual application requirements, which is not limited in the embodiments of the present disclosure.

Based on the above examples, in the embodiments of the present disclosure, it is possible to determine that there may already have the potential stability issue in the communication link from the target controller to the first controller in a case of detecting the single abnormity record, and a work log of the first controller and a work log of the target controller are queried based on the target timestamp included in the single abnormity record, thereby accurately locating the potential stability issue already existed in the communication link from the target controller to the first controller in a timely manner, so as to take the corresponding measure to optimize the communication link from the first controller to the target controller.

In another specific example, the single abnormity record may also be generated by:

   obtaining query time based on the target timestamp;
   obtaining query contents; and
   generating the single abnormity record based on the query time and the query contents.

Here, the query time may be generated based solely on the target timestamp. For example, a query time including the target timestamp is generated. For example, a specified time period with the target timestamp as the midpoint and including second preset time lengths before and after the midpoint is generated as the single abnormity record. The second preset time lengths may be set according to actual application requirements, which is not limited in the embodiments of the present disclosure.

In addition, in the embodiments of the present disclosure, the query contents may include at least one of a single communication data amount from the target controller to the first controller, a communication bandwidth of the first controller, a communication bandwidth of the target controller, and an execution cycle of the target controller.

Based on the above examples, in the embodiments of the present disclosure, it is possible to determine that there may already have the potential stability issue in the communication link from the target controller to the first controller in the case of detecting the single abnormity record, and a portion related to the single communication data amount from the target controller to the first controller and the communication bandwidth of the first controller in the work log of the first controller and a portion related to the communication bandwidth and the execution cycle of the target controller in the work log of the target controller are queried based on the query time included in the single abnormity record, thereby accurately locating the potential stability issue already existed in the communication link from the target controller to the first controller in a timely manner, so as to take the corresponding measure to optimize the communication link from the first controller to the target controller.

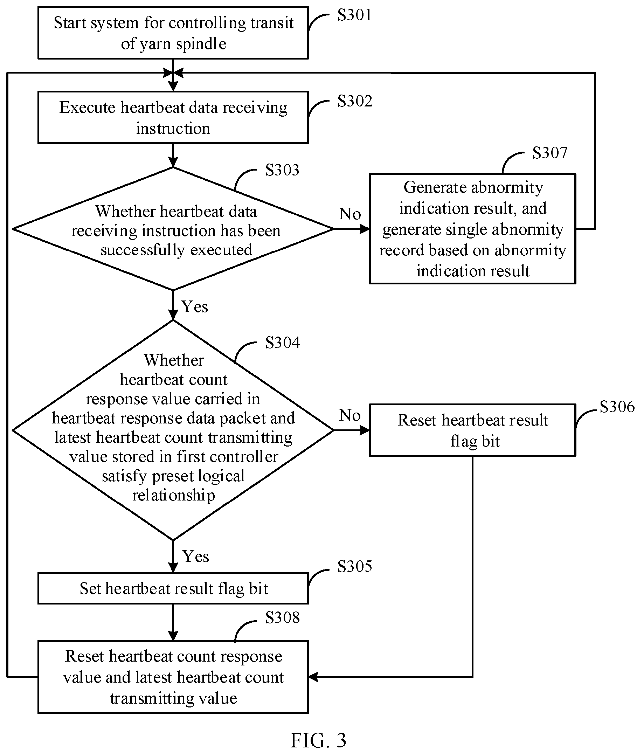

Hereinafter, partial processes involved in the method for controlling transit of the yarn spindle provided by embodiments of the present disclosure will be explained further in combination with FIG. 3.

At step S301, the system for controlling transit of the yarn spindle is started.

At step S302, the heartbeat data receiving instruction is executed.

In an example, the first controller may execute the heartbeat data receiving instruction according to the preset time interval. The preset time interval may be set according to actual application requirements, which is not limited in the embodiments of the present disclosure.

In addition, in the embodiments of the present disclosure, the heartbeat data receiving instruction may be the "GET instruction".

At step S303, whether the heartbeat data receiving instruction has been successfully executed is determined.

As mentioned above, the heartbeat data receiving instruction may be the "GET instruction". Based on this, in the embodiments of the present disclosure, after executing the heartbeat data receiving instruction, the first state code (e.g. the Error state code) and the second state code (e.g. the "Status state code") may be obtained, it is determined that the heartbeat data receiving instruction has been successfully executed in the case where both the first and second state codes are 0, and it is determined that the heartbeat data receiving instruction has not been successfully executed in the case where at least one of the first and second state codes is not 0.

In the embodiments of the present disclosure, in the case where the heartbeat data receiving instruction is successfully executed, it may be determined that the communication link from the target controller to the first controller is in the normal state, and step S304 will be performed. In the case where the heartbeat data receiving instruction is not successfully executed, it may be determined that the communication link from the target controller to the first controller is in the abnormal state, and step S307 will be performed.

Furthermore, in the embodiments of the present disclosure, the first controller may take each of the plurality of second controllers as the target controller, and receiving the target business data sent by the target controller in the case where it is determined that the communication link from the target controller to the first controller is in the normal state, and then send the target business data to the MES. The MES is used to obtain the target transit indication based on the target business data, and send the target transit indication to the first controller. Afterwards, the first controller may receive the target transit indication sent by MES and send the target transit indication to the target controller. The target controller is used to perform the transit control operation for yarn spindle product transiting the target workstation based on the target transit indication. Here, the transit control operation may be achieved through the transit control device set at the target workstation corresponding to the target controller, and the transit control operation is used to control the flow of the yarn spindle product and/or control whether the yarn spindle product transits the target workstation.

At step S304, whether the heartbeat count response value carried in the heartbeat response data packet and the latest heartbeat count transmitting value stored in the first controller satisfy the preset logical relationship is determined.

The latest heartbeat count value may be the current heartbeat count value carried in the latest heartbeat data packet sent by the first controller to the target controller.

In addition, in an example, the preset logical relationship may be that the heartbeat count response value and the latest heartbeat count transmitting value are not equal to each other. In another example, the preset logical relationship may also be: the heartbeat count response value = the latest heartbeat count transmitting value + 1.

In the embodiments of the present disclosures, in the case where the heartbeat count response value carried in the heartbeat response data packet and the latest heartbeat count transmitting value stored in the first controller satisfy the preset logical relationship, it is determined that the communication link from the target controller to the first controller is in the normal state, and step S305 will be performed, and in the case where the heartbeat count response value carried in the heartbeat response data packet and the latest heartbeat count transmitting value stored in the first controller do not satisfy the preset logical relationship, it is determined that the communication link from the target controller to the first controller is in the abnormal state, and step S306 will be performed.

At step S305, the heartbeat result flag bit is set (i.e., setting HB_oK = 1).

In the embodiments of the present disclosure, after executing step S305, step S308 will be performed.

At step S306, the heartbeat result flag bit is reset (i.e., setting HB_oK= 0).

In the embodiments of the present disclosure, after executing step S306, step S308 will be performed.

At step S307, the abnormity indication result is generated, and the single abnormity record is generated based on the abnormity indication result.

The abnormity indication result is used to represent that the communication link from the target controller to the first controller is in the abnormal state, and the single abnormity record may be identified by the error code of 3308.

In some alternative implementations, "generating the single abnormity record based on the abnormity indication result" may include:

> obtaining the target timestamp corresponding to the abnormity indication result; and
> generating the single abnormity record based on the target timestamp.

In an example, the timestamp recorded by the first controller when executing the heartbeat data receiving instruction corresponding to the abnormity indication result may be obtained as the target timestamp corresponding to the abnormity indication result, and the single abnormity record may be generated based on the target timestamp.

In a specific example, the single abnormity record may be generated based solely on the target timestamp. For example, the single abnormity record including the target timestamp is generated. For example, the specified time period with the target timestamp as the midpoint and including the first preset time lengths before and after the midpoint is generated as the single abnormity record. The first preset time lengths may be set according to actual application requirements, which is not limited in the embodiments of the present disclosure.

In another specific example, the single abnormity record may also be generated by:

> obtaining the query time based on the target timestamp;
> obtaining the query contents; and
> generating the single abnormity record based on the query time and the query contents.

The query time may be generated based solely on the target timestamp. For example, a query time including the target timestamp is generated. For example, the specified time period with the target timestamp as the midpoint and including the second preset time lengths before and after the midpoint is generated as the single abnormity record. The second preset time lengths may be set according to actual application requirements, which is not limited in the embodiments of the present disclosure.

In addition, in the embodiments of the present disclosure, the query contents may include at least one of the single communication data amount from the target controller to the first controller, the communication bandwidth of the first controller, the communication bandwidth of the target controller, and the execution cycle of the target controller.

In the embodiments of the present disclosure, after executing step S307, step S302 will be performed.

At step S308, the heartbeat count response value and the latest heartbeat count transmitting value are reset.

In the embodiments of the present disclosure, after executing step S308, step S302 will be performed.

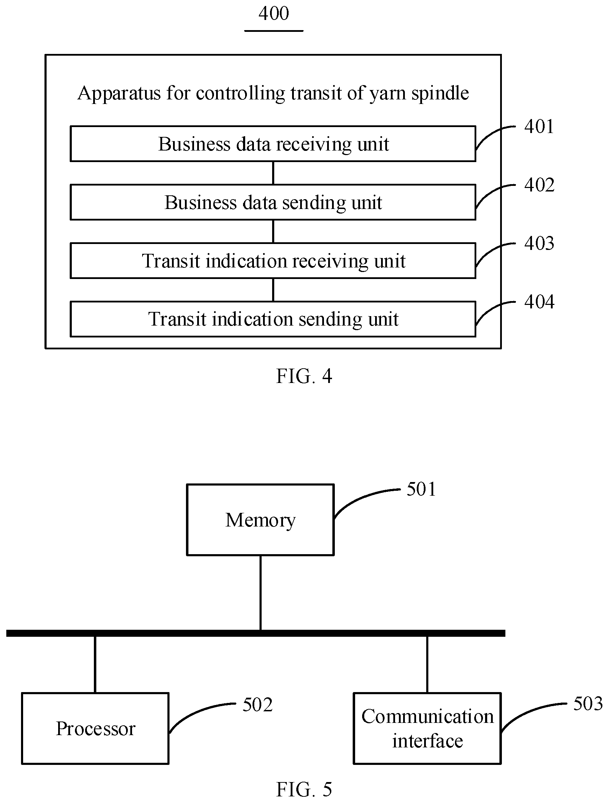

In order to better implement the above method for controlling transit of the yarn spindle, the embodiments of the present disclosure further provide an apparatus for controlling transit of the yarn spindle, which is applied to the first controller included in the system for controlling transit of the yarn spindle. Hereinafter, the apparatus for controlling transit of the yarn spindle 400 provided by the embodiments of the present disclosure will be explained in combination with FIG. 4.

The apparatus for controlling transit of the yarn spindle 400 includes:

> a business data receiving unit 401 configured to take each of the plurality of second controllers as a target controller, and receive target business data sent by the target controller in the case of determining that a communication link from the target controller to the first controller is in a normal state;
> a business data sending unit 403 configured to send the target business data to the MES; the MES is configured to obtain a target transit indication based on the target business data, and send the target transit indication to the first controller;
> a transit indication receiving unit 403 configured to receive the target transit indication sent by the MES; and
> a transit indication sending unit 404 configured to send the target transit indication to the target controller; the target controller is configured to carry on the transit control operation for the yarn spindle product transiting the target workstation corresponding to the target controller based on the target transit indication.

In some alternative implementations, the business data receiving unit 401 is configured to:

> execute the heartbeat data receiving instruction; the heartbeat data receiving instruction is used to instruct the first controller to receive the heartbeat response data packet sent by the target controller; and
> determine that the communication link from the target controller to the first controller is in the normal state, and receive the target business data sent by the target controller, in the case where the heartbeat data receiving instruction is successfully executed.

In some alternative implementations, the business data receiving unit 401 is configured to:

> obtain the heartbeat count response value carried in the heartbeat response data packet in the case where the heartbeat data receiving instruction is successfully executed;
> obtain the latest heartbeat count transmitting value stored in the first controller; and
> determine that the communication link from the target controller to the first controller is in the normal state, and receive the target business data sent by the target controller, in the case where the heartbeat count response value and the latest heartbeat count transmitting value satisfy the preset logical relationship.

The business data receiving unit 401 is configured to:

> determine that the communication link from the target controller to the first controller is in the normal state in the case where there is the at least one communicable link in the plurality of candidate links; the communicable link is the candidate link through which the heartbeat response data packet sent by the target controller is successfully received to represent that the heartbeat data receiving instruction is successfully executed; the heartbeat count response value carried in the heartbeat response data packet received through the communicable link and the latest heartbeat count transmitting value stored in the first controller satisfy the preset logical relationship;
> select the communicable link with the best communication state from the at least one communicable link as the target link; and
> receive the target business data sent by the target controller through the target link.

In some alternative implementations, the business data receiving unit 401 is configured to:

> determine the plurality of evaluation indicators;

> obtain the plurality of target weights corresponding to the plurality of evaluation indicators one by one; and
> select the communicable link with the best communication state from the at least one communicable link as the target link based on the plurality of evaluation indicators and the plurality of target weights.

In some alternative implementations, the business data receiving unit 401 is configured to:

> obtain the plurality of reference weights corresponding to the plurality of evaluation indicators one by one; and
> adjust the plurality of reference weights respectively based on the target business data, to obtain the plurality of target weights corresponding to the plurality of evaluation indicators one by one.

In some alternative implementations, the apparatus for controlling transit of the yarn spindle 400 further includes a single abnormity record generating unit configured to:

> generate the abnormity indication result in the case where the heartbeat data receiving instruction is not successfully executed; the abnormity indication result is used to represent that the communication link from the target controller to the first controller is in the abnormal state; and
> generate the single abnormity record based on the abnormity indication result.

In some alternative implementations, the single abnormity record generating unit is configured to:

> obtain the target timestamp corresponding to the abnormity indication result; and
> generate the single abnormity record based on the target timestamp.

In some alternative implementations, the single abnormity record generating unit is configured to:

> obtain the query time based on the target timestamp;
> obtain the query contents; and
> generate the single abnormity record based on the query time and the query contents.

In some alternative implementations, the query contents include at least one of the single communication data amount from the target controller to the first controller, the communication bandwidth of the first controller, the communication bandwidth of the target controller, and the execution cycle of the target controller.

The descriptions to specific functions and examples of each unit of the apparatus for controlling transit of the yarn spindle 400 provided by the embodiments of the present disclosure may refer to the relevant descriptions to the corresponding steps in the above method embodiments, which will not be repeated herein.

In the technical solution of the present disclosure, acquisition, storage and application of the user's personal information involved are all in compliance with provisions of relevant laws and regulations, and do not violate public order and good customs.

FIG. 5 is a schematic structural block diagram of an electronic device according to the embodiments of the present application. As shown in FIG. 5, the electronic device includes a memory 510 and a processor 502, a computer program capable of being run on the processer 502 is stored in the memory 501. The number of each of the memory 501 and processor 502 may be one or more. The memory 501 may store one or more computer programs, which, when the one or more computer programs are executed by the electronic device, cause the electronic device performs the method provided in the above method embodiments. The electronic device may also include a communication interface 503 configured to communicate with an external device for carrying out data interactive transmission.

If the memory 501, the processor 502 and the communication interface 503 are implemented independently, the memory 501, the processor 502 and the communication interface 503 may be connected to each other and complete communication with each other through a bus. The bus may be an Industry Standard Architecture (ISA) bus, a Peripheral Component Interconnect (PCI) bus, an Extended Industry Standard Architecture (EISA) bus or the like. The bus may be divided into an address bus, a data bus, a control bus and the like. For ease of representation, the bus is shown by only one thick line in FIG. 5, which does not mean that there is only one bus or one type of bus.

Alternatively, in specific implementation, if the memory 501, the processor 502 and the communication interface 503 are integrated on one chip, the memory 501, the processor 502 and the communication interface 503 may complete communication with each other through internal interfaces.

It should be understood that the above processor may be a central processing unit (CPU), or may be another general-purpose processor, a digital signal processing (DSP), an application specific integrated circuit (ASIC), a field programmable gate array (FPGA) or another programmable logic device, a discrete gate or a transistor logic device, a discrete hardware component, or the like. The general-purpose processor may be a microprocessor or any conventional processor, etc. It is worth noting that the processor may be a processor that supports the Advanced RISC Machines (ARM) architecture.

Furthermore, alternatively, the above memory may include a read-only memory and a random-access memory, and may also include a non-volatile random access memory. The memory may be either a volatile memory or a non-volatile memory, or it may include both the volatile and non-volatile memories. Where the non-volatile memory may include a read-only memory (ROM), a programmable ROM (PROM), an erasable programmable PROM (EPROM), an electrically erasable programmable ROM (EEPROM), or a flash memory. The volatile memory may include a random access memory (RAM), which is used as an external cache. With illustrative but not restrictive illustrations, many forms of RAM are available, for example, a static RAM (SRAM), a dynamic ROM (DRAM), a synchronous DRAM (SDRAM), a double data date SDRAM (DDR SDRAM), an enhanced SDRAM (ESDRAM), a Synchlink DRAM (SLDRAM) and a direct RAMBUS RAM (DR RAM).

In the above embodiments, it may be realized in whole or in part by software, hardware, firmware, or any combination thereof. When implemented using software, it may be implemented in whole or in part in a form of a computer program product. The computer program product includes one or more computer instructions. When the computer instructions are loaded and executed on a computer, a process or function described in the embodiments of the present disclosure is produced in whole or in part. The computer may be a general-purpose computer, a specialized computer, a computer network, or another programmable apparatus. The computer instructions may be stored in a computer-readable storage medium, or transmitted from a computer-readable storage medium to another computer-readable storage medium, for example, the computer instructions may be transmitted from a website site, computer, server or data center to another website site, computer, computer, server or data center by a wired (e.g., coaxial cable, optical fiber, data subscriber line (DSL)) or wireless (e.g., infrared, Bluetooth, microwave, etc.) manner. The computer-readable storage medium may be any available medium that the computer can access, or may be a data storage device such as a server, a data center, etc., which is integrated with one or more available medium. The available medium may be magnetic medium (e.g., floppy disk, hard disk, magnetic tape), optical medium (e.g., digital versatile disc (DVD)) or semiconductor medium (e.g., solid state disk (SSD)) and the like. It should note that the computer-readable storage medium referred to in the present disclosure may be non-volatile storage medium, in other words, non-transient storage medium.

Those having ordinary skills in the art may understand that all or part of the steps to realize the above embodiment may be completed by hardware, or by instructing related hardware by a program, and the program may be stored in a computer-readable storage medium, and the storage medium mentioned above may be a read-only memory, a disk or an optical disc, etc.

In descriptions to the embodiments of the present disclosure, descriptions referring to terms "an embodiment", "some embodiments", "an example", "a specific example", or "some examples" or the like mean that specific features, structures, materials, or features described in the embodiment(s) or example(s) are included in at least one embodiment or example of the present disclosure. Furthermore, the specific features, structures, materials, or features described may be combined in an appropriate manner in any one or more embodiments or examples. In addition, without contradicting each other, those having skills in the art may combine and integrate different embodiments or examples described in this Description and features of the different embodiments or examples.

In the descriptions to the embodiments of the present disclosure, unless otherwise indicated, "/" means "or", for example, A/B may mean A or B. The word "and/or" herein is merely an associated relationship for describing associated objects, which indicates that there may be three kinds of relationships, for example, A and/or B may means that there are three cases: A alone, both A and B, and B alone.

In the descriptions to the embodiments of the present disclosure, terms "first", "second" and "third" are used only for a descriptive purpose and should not be construed as indicating or implying relative importance or implying the number of technical features indicated. Thus, features defined with the terms "first", "second" and "third may explicitly or implicitly include one or more of these features. In the descriptions to the embodiments of the present disclosure, unless otherwise specified, "a/the plurality of" means two or more of them.

The foregoing is only exemplary embodiments of the present disclosure, but is not used to limit the present disclosure, and all changes, substitutions and improvements within the scope of the present disclosure should be included in the protection scope of the present disclosure.

**Claims**

1. A method for controlling transit of a yarn spindle, applied to a first controller comprised in a system for controlling transit of the yarn spindle, the system for controlling transit of the yarn spindle further comprises a manufacturing execution system in communication with the first controller and a plurality of second controllers, wherein each of the plurality of second controller has a corresponding yarn spindle workstation for obtaining business data related to the yarn spindle workstation, and carries on a transit control operation for a yarn spindle product transiting the yarn spindle workstation; and the method comprises:

   taking (S201) each of the plurality of second controllers as a target controller, and receiving target business data sent by the target controller in a case of determining that a communication link from the target controller to the first controller is in a normal state;
   sending (S202) the target business data to the manufacturing execution system; wherein the manufacturing execution system is configured to obtain a target transit indication based on the target business data, and send the target transit indication to the first controller;
   receiving (S203) the target transit indication sent by the manufacturing execution system; and sending (S204) the target transit indication to the target controller; wherein the target controller is configured to carry on the transit control operation for the yarn spindle product transiting the target workstation corresponding to the target controller based on the target transit indication.

2. The method of claim 1, wherein receiving the target business data sent by the target controller in the case of determining that the communication link from the target controller to the first controller is in the normal state comprises:

   executing a heartbeat data receiving instruction; wherein the heartbeat data receiving instruction is used to instruct the first controller to receive a heartbeat response data packet sent by the target controller; and
   determining that the communication link from the target controller to the first controller is in the normal state, and receiving the target business data sent by the target controller, in a case where the heartbeat data receiving instruction is successfully executed.

3. The method of claim 2, wherein determining that the communication link from the target controller to the first controller is in the normal state, and receiving the target business data sent by the target controller, in the case where the heartbeat data receiving instruction is successfully executed, comprises:

   obtaining a heartbeat count response value carried in the heartbeat response data packet in the case where the heartbeat data receiving instruction is successfully executed;
   obtaining a latest heartbeat count transmitting value stored in the first controller; and
   determining that the communication link from the target controller to the first controller is in the normal state, and receiving the target business data sent by the target controller, in a case where the heartbeat count response value and the latest heartbeat count transmitting value satisfy a preset logical relationship.

4. The method of claim 2, wherein the heartbeat data receiving instruction is used to instruct the first controller to respectively receive the heartbeat response data packet sent by the target controller through a plurality of candidate links;

wherein determining that the communication link from the target controller to the first controller is in the normal state, and receiving the target business data sent by the target controller, in the case where the heartbeat data receiving instruction is successfully executed, comprises:

determining that the communication link from the target controller to the first controller is in the normal state in a case where there is at least one communicable link in the plurality of candidate links; wherein the communicable link is a candidate link through which the heartbeat response data packet sent by the target controller is successfully received to represent that the heartbeat data receiving instruction is successfully executed; a heartbeat count response value carried in the heartbeat response data packet received through the communicable link and a latest heartbeat count transmitting value stored in the first controller satisfy a preset logical relationship;

selecting a communicable link with best communication state from the at least one communicable link as a target link; and

receiving the target business data sent by the target controller through the target link.

5. The method of claim 4, wherein selecting the communicable link with the best communication state from the at least one communicable link as the target link comprises:

determining a plurality of evaluation indicators;

obtaining a plurality of target weights corresponding to the plurality of evaluation indicators one by one; and

selecting the communicable link with the best communication state from the at least one communicable link as the target link based on the plurality of evaluation indicators and the plurality of target weights.

6. The method of claim 5, wherein obtaining the plurality of target weights corresponding to the plurality of evaluation indicators one by one comprises:

obtaining a plurality of reference weights corresponding to the plurality of evaluation indicators one by one; and

adjusting the plurality of reference weights respectively based on the target business data, to obtain the plurality of target weights corresponding to the plurality of evaluation indicators one by one.

7. The method of any one of claims 2 to 6, further comprises:

generating an abnormity indication result in a case where the heartbeat data receiving instruction is not successfully executed; wherein the abnormity indication result is used to represent that the communication link from the target controller to the first controller is in an abnormal state; and

generating a single abnormity record based on the abnormity indication result.

8. The method of claim 7, wherein generating the single abnormity record based on the abnormity indication result comprises:

obtaining a target timestamp corresponding to the abnormity indication result; and

generating the single abnormity record based on the target timestamp.

9. The method of claim 8, wherein generating the single abnormity record based on the target timestamp comprises:

obtaining query time based on the target timestamp;

obtaining query contents; and

generating the single abnormity record based on the query time and the query contents.

10. The method of claim 9, wherein the query contents comprise at least one of a single communication data amount from the target controller to the first controller, a communication bandwidth of the first controller, a communication bandwidth of the target controller, and an execution cycle of the target controller.

11. An apparatus for controlling transit of a yarn spindle, applied to a first controller comprised in a system for controlling transit of the yarn spindle, the system for controlling transit of the yarn spindle further comprises a manufacturing execution system in communication with the first controller and a plurality of second controllers, wherein each of the plurality of second controller has a corresponding yarn spindle workstation for obtaining business data related to the yarn spindle workstation, and carries on a transit control operation for a yarn spindle product transiting the yarn spindle workstation; and the apparatus comprises:

a business data receiving unit (401) configured to take each of the plurality of second controllers as a target controller, and receive target business data sent by the target controller in a case of determining that a communication link from the target controller to the first controller is in a normal state;

a business data sending unit (402) configured to send the target business data to the manufacturing execution system; wherein the manufacturing execution system is configured to obtain a target transit indication based on the target business data, and send the target transit indication to the first controller;

a transit indication receiving unit (403) configured to receive the target transit indication sent by the manufacturing execution system; and

a transit indication sending unit (404) configured to send the target transit indication to the target controller; wherein the target controller is configured to carry on the transit control operation for the yarn spindle product transiting the target workstation corresponding to the target controller based on the target transit indication.

12. A non-transitory computer-readable storage medium storing a computer instruction thereon, wherein the computer instruction is used to cause a computer to execute the method of any one of claims 1 to 10.

MES

First controller

Second controller

Second controller

......

Yarn spindle
workstation

Yarn spindle
workstation

......

Yarn spindle
workstation

Yarn spindle
workstation

......

FIG. 1

Take each of second controllers as target controller, and receive target business data sent by target controller in a case of determining that communication link from target controller to first controller is in normal state ⌐ S201

↓

Send target business data to MES; MES is used to obtain target transit indication based on target business data, and send target transit indication to first controller ⌐ S202

↓

Receive target transit indication sent by MES ⌐ S203

↓

Send target transit indication to target controller; target controller is used to carry on transit control operation for yarn spindle product transiting target workstation corresponding to the target controller based on target transit indication ⌐ S204

FIG. 2

Start system for controlling transit
of yarn spindle — S301

Execute heartbeat data receiving
instruction — S302

Whether heartbeat data
receiving instruction has been
successfully executed — S303

No

Generate abnormity
indication result, and
generate single abnormity
record based on abnormity
indication result — S307

Yes

Whether
heartbeat count
response value carried in
heartbeat response data packet and
latest heartbeat count transmitting
value stored in first controller
satisfy preset logical
relationship — S304

No

Reset heartbeat result
flag bit — S306

Yes

Set heartbeat result flag bit — S305

Reset heartbeat count response
value and latest heartbeat count
transmitting value — S308

FIG. 3

400

Apparatus for controlling transit of yarn spindle

| Business data receiving unit | 401 |
| Business data sending unit | 402 |
| Transit indication receiving unit | 403 |
| Transit indication sending unit | 404 |

FIG. 4

Memory — 501

Processor — 502

Communication interface — 503

FIG. 5

**EP 4 718 184 A1**

Europäisches Patentamt
European Patent Office
Office européen des brevets

# EUROPEAN SEARCH REPORT

**Application Number**

EP 25 18 5510

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | CN 110 161 950 A (UNIV BEIJING INF SCI & TECH) 23 August 2019 (2019-08-23) * the whole document * | 1-12 | INV. G05B19/418 |
| Y | MA HONGLIANG ET AL: "An Automatic Collection System for Textile Production Based on Wi-Fi and CAN Bus", 2016 SIXTH INTERNATIONAL CONFERENCE ON INSTRUMENTATION & MEASUREMENT, COMPUTER, COMMUNICATION AND CONTROL (IMCCC), IEEE, 21 July 2016 (2016-07-21), pages 879-883, XP033018733, DOI: 10.1109/IMCCC.2016.100 [retrieved on 2016-12-05] * the whole document * | 1-12 | |
| Y | CN 108 469 790 A (UNIV WUHAN TECH) 31 August 2018 (2018-08-31) * the whole document * | 1-12 | |
| Y | US 2002/152446 A1 (FLEMING ROGER A [US]) 17 October 2002 (2002-10-17) * abstract * * paragraph [0008] - paragraph [0012] * * paragraph [0020] - paragraph [0041] * * claims 12-20 * | 1-12 | TECHNICAL FIELDS SEARCHED (IPC) G05B |
| A | WO 2017/165701 A1 (NEBBIOLO TECH INC [US]) 28 September 2017 (2017-09-28) * abstract * * paragraph [0003] - paragraph [0005] * * paragraph [0035] - paragraph [0083] * | 1-12 | |
| A | CN 112 849 466 A (ZHUHAI GREE INTELLIGENT EQUIPMENT CO LTD ET AL.) 28 May 2021 (2021-05-28) * the whole document * | 1-12 | |

The present search report has been drawn up for all claims

| Place of search | Date of completion of the search | Examiner |
|---|---|---|
| The Hague | 28 November 2025 | Abbing, Ralf |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

21

## ANNEX TO THE EUROPEAN SEARCH REPORT
## ON EUROPEAN PATENT APPLICATION NO.

EP 25 18 5510

This annex lists the patent family members relating to the patent documents cited in the above-mentioned European search report.
The members are as contained in the European Patent Office EDP file on
The European Patent Office is in no way liable for these particulars which are merely given for the purpose of information.

28-11-2025

| Patent document cited in search report | | Publication date | Patent family member(s) | | Publication date |
|---|---|---|---|---|---|
| CN 110161950 | A | 23-08-2019 | NONE | | |
| CN 108469790 | A | 31-08-2018 | NONE | | |
| US 2002152446 | A1 | 17-10-2002 | NONE | | |
| WO 2017165701 | A1 | 28-09-2017 | EP | 3437256 A1 | 06-02-2019 |
| | | | JP | 6982717 B2 | 17-12-2021 |
| | | | JP | 2019514144 A | 30-05-2019 |
| | | | US | 2017277173 A1 | 28-09-2017 |
| | | | WO | 2017165701 A1 | 28-09-2017 |
| CN 112849466 | A | 28-05-2021 | NONE | | |

EPO FORM P0459

For more details about this annex : see Official Journal of the European Patent Office, No. 12/82